# EUROPEAN PATENT SPECIFICATION

(11) **EP 1 226 048 B1**
(45) Date of publication and mention of the grant of the patent: **04.04.2007**
(21) Application number: 00976497.8
(22) Date of filing: 01.11.2000
(51) Int. Cl.: B60P 1/02, B62D 33/04

(54) **ARRANGEMENT AT A LOAD CARRIER**
ANORDNUNG IN EINEM LASTTRÄGER
DISPOSITIF POUR UN PORTE-CHARGE

(30) Priority: 01.11.1999 SE 9903933
(43) Date of publication of application: 31.07.2002
(73) Proprietor: Sandström, Dan, 975 91 Lulea (SE)
(72) Inventor: Sandström, Dan, 975 91 Lulea (SE)
(74) Representative: Karlström, Lennart
(86) International application number: PCT/SE2000/002144
(87) International publication number: WO 2001/032466

(56) References cited:
- WO-A1-93/22159
- WO-A1-97/18103
- SE-C2- 514 026

## Description

The present invention relates to a load carrier arrangement, and then particularly to raisable and lowerable load carriers in a loading compartment. Such arrangements are used primarily in the loading compartments of trucks, where the carriers support loads and can be raised and lowered to enable goods to be supported at several levels in the compartment.

It is known to include in such arrangements vertical rails at both longitudinal edges of the compartment to enable the load carriers to be raised and lowered, said rails being disposed in pairs with each rail centrally opposite the other. These carrier rails include a dovetail-like strip which extends vertically and projects out towards the interior of the compartment, and which also functions to guide the load carrier along the carrier beam. The load carriers include a transverse load arm which carries at each end a slide shoe that includes an undercut groove such as to enable the slide shoe, and therewith the load carrier as a whole, to be moved up and down the carrier rail, with the undercut groove embracing the dovetail strip. Disposed equidistantly along the carrier rail are openings in which a locking pin projecting out from the slide shoe can engage and therewith lock the slide shoe in a desired vertical position along the carrier rail.

This known load carrier can be moved up and down the carrier rails, as described above, at least theoretically, by loosening the normally spring-loaded locking pins. One problem with this arrangement is that the load carrier will often jam as a result of the slide shoes twisting or skewing slightly in relation to the dovetail strips and therewith locking the load carrier and requiring the shoe to be moved back slightly before movement of the load carrier can be continued.

Another problem is caused by the exposed position of the dovetail strips. These strips project beyond the edge of surrounding walls in the loading compartment. This means that goods are able to knock against the strips and therewith damage the strips to an extent which makes it difficult or impossible to move the slide shoe, and therewith the load carrier, vertically along the carrier rails.

From EP-A-0953478 is known a load carrier arrangement according to the preamble of claim 1 in which floor sections are moveable vertically along guide rails in a loading compartment. These vertically mounted guide rails include a longitudinally extending recess, in which a runner runs, said runner being connected-to the floor sections. Those runners co-acting with the guide rails solve the problems of jamming, but the guide rails are mounted on the inside of the loading compartment walls and consequently they also have an exposed position, and are likely to be damaged when loading or unloading the loading compartment.

Accordingly, it is an object of the present invention to provide a novel load carrier arrangement of the aforesaid kind with which the aforesaid problems associated with present-day load carriers are avoided.

This object of the invention has been achieved with a load carrier arrangement that has the features disclosed in the accompanying Claims.

In the inventive arrangement the carrier rails include hollow channels lying on respective sides of a longitudinally extending slot that is open towards the longitudinally extending recess, wherein the hollow channels having external wall surfaces that are sunken in relation to an external surface outwardly of the longitudinally extending recess such that an outer surface of a wall lining panel disposed inside the loading compartment and lying on the external wall surfaces of the hollow channels will lie generally ,in line with the outer surface outside the longitudinally extending recess, and through the slot shafts carrying said runners extend from the recess of the carrier rail and into the inside of the loading compartment.

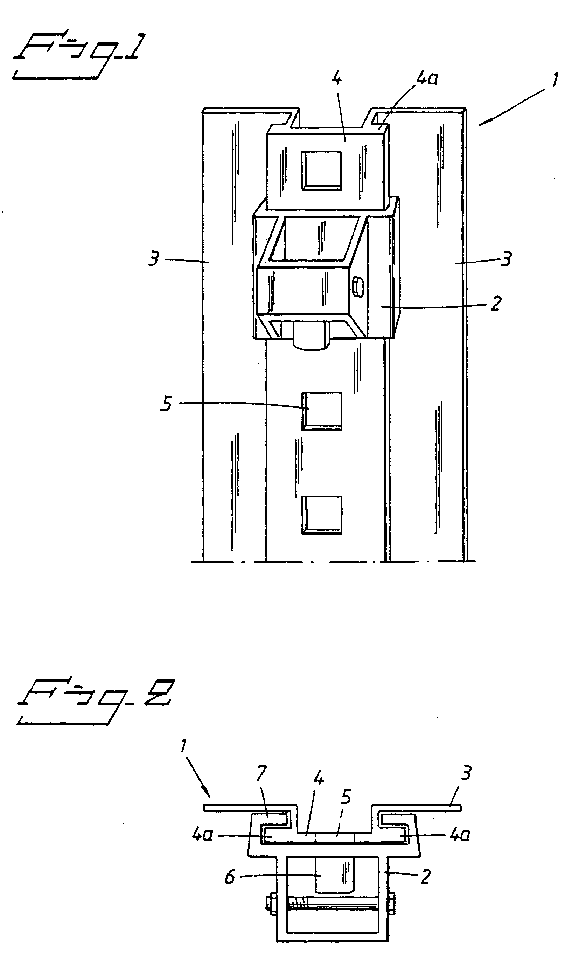

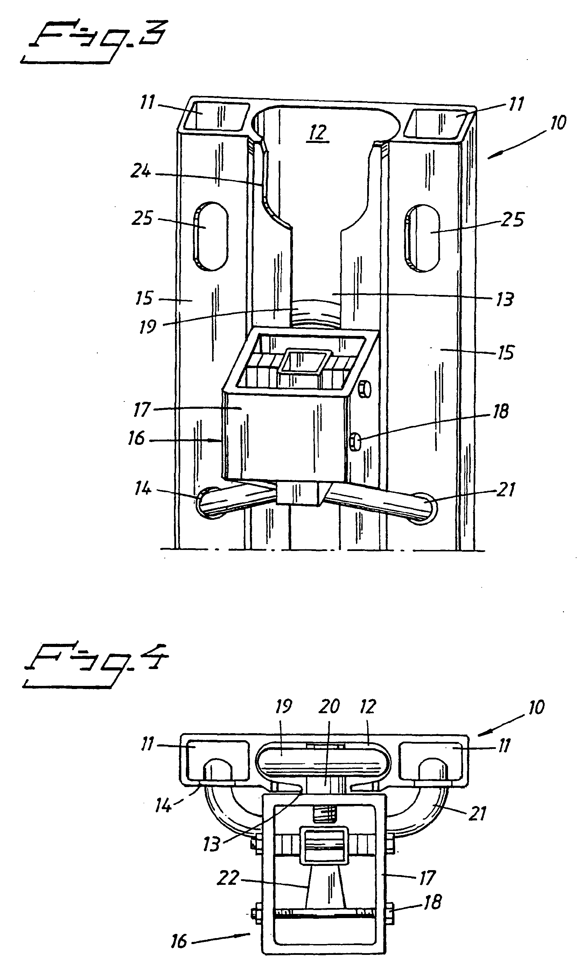

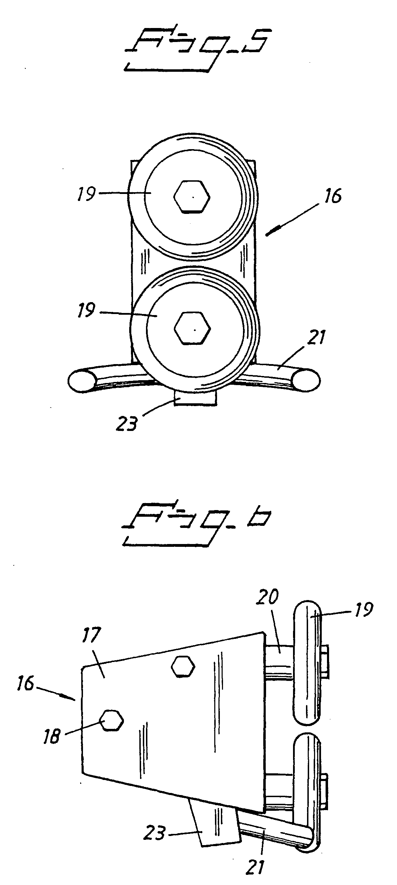

The invention will now be described in more detail with reference to an exemplifying embodiment thereof and also with reference to the accompanying drawings, in which **Fig. 1** is a schematic perspective view of a carrier rail and slide shoe of a known load carrier arrangement; **Fig. 2** shows the carrier rail and slide shoe of Fig. 1 from above; **Fig. 3** is a schematic perspective view of a carrier rail and a slide shoe included by an inventive load carrier arrangement; **Fig. 4** shows the carrier rail and the slide shoe of Fig. 3 from above; **Fig. 5** is a schematic front view of the slide shoe shown in Figs. 3 and 4; and **Fig. 6** is a side view of the slide shoe shown in Fig. 5.

The carrier strip 1 shown in Fig. 1 is intended to be mounted vertically on one side of a loading compartment, for instance a truck compartment, a railroad carriage compartment, a load container, skip, or like device. Carrier strips 1 are normally disposed along the long sides of the compartment, equidistantly and mutually opposite one another in pairs. The carrier strips co-act with a slide shoe 2 arranged for movement up and down along the carrier strips. A load beam (not shown) whose length corresponds to the internal width of the compartment is provided with a slide shoe 2 at each end and can thus also be moved up and down the carrier strips 1 of a pair of co-acting strips. A further loading plane additional to the floor of the compartment can be provided in said compartment, by arranging such load beams at selected heights in the loading compartment.

The known carrier strip 1 includes a planar part that has two flanges 3 and a strip 4 disposed therebetween. The strip 4 projects out from the planar part and has a generally dovetail configuration. Arranged in the centre of the strip 4 are openings 5 for receiving a locking pin 6 provided on a co-acting slide shoe 2. It is the two outwardly projecting ends 4a of the strip 4 that are especially exposed to damage by the goods being transported in the loading compartment or when loading and unloading said goods. The slide shoe 2 includes two arms 7 that embrace both outwardly projecting ends 4a of the dovetail strip.4.

The carrier rail 10 of the inventive arrangement includes a box profile, suitably made of aluminium. The carrier rail includes two hollow side-channels 11 and an intermediate channel or longitudinally extending aperture 12 that has a longitudinally open slot 13.

Both of the hollow slide channels include openings 14 through which locking devices on co-acting slide shoes can engage. The external surfaces 15 of the hollow channel walls in which the openings 14 are disposed and which face in the same direction as the slot 13 in the intermediate channel 12 are positioned slightly inwards in relation to the external surface in which the slot 13 is disposed. This enables the carrier rails to be mounted on the side walls of a loading compartment such that a panel covering the inner wall of the loading compartment and fastened to the outer surface 15 of the hollow channels 11 will lie in line with the external surface in which the slot 13 is disposed. This enables the loading compartment to be fitted with an inner wall that is free from outwardly projecting parts and, at the same time, protect the carrier rail 10 within the wall of the loading compartment.

As with the known arrangement, the carrier rail 10 co-acts with a slide shoe 16. However, the slide shoe of the inventive arrangement is completely different to the slide shoe of the known arrangement. The slide shoe 16 of the inventive arrangement includes an attachment body 17 to which a loading arm (not shown) can be pivotally attached to a carrying pivot 18. The attachment body 17 has two runners 19 mounted one above the other on respective mutually parallel shafts 20 that project out from the attachment body 17 in a direction opposite to that in which the loading arm extends. The two runners 19 are designed and dimensioned to run in the intermediate channel 12 in the carrier rail 10, with the shafts 20 extending through the slot 13, said attachment body 17 thus being located outside the external surface 15.

The provision of two runners, or rollers, one above the other provides a slide shoe guide which, when the slide shoe 16 is coupled to the carrier rail 10, prevents twisting of the slide shoe, and therewith also of the load carrier. Naturally, the arrangement may be provided with more than two runners that are positioned one above the other to this end.

The slide shoe 16 is also provided with a locking device which enables the slide shoe to be locked firmly at a selected height along the carrier rail. This locking device includes a generally U-shaped element 21 whose legs project out from the attachment body 17 in the same direction as the runners 19 for insertion through the openings 14 in the hollow channels 11 on respective sides of the intermediate channel 13 in which the runners 19 move. The U-shaped element 21 slopes slightly downwards to achieve a self-locking effect with the attachment body 17. The locking element 21 is also spring-biased in a direction towards the carrier rail 10 by means of a spring 22. Said element also includes a gripping surface 23 by means of which the U-shaped element 21 can be released from the openings against the action of the spring force exerted by the spring 22, therewith enabling said element 21 to be moved out of engagement with the openings 14. This enables the load carrier to be moved up or down along the carrier rail.

For the purpose of enabling the runners 19 on the slide shoe to be inserted in the intermediate channel 12 in the carrier rail 10, the slot 13 may be provided with a widening 24 in the upper end of the carrier rail such as to enable the runners 19 to be inserted straight-on into the intermediate channel. The width of the widening 24 will be slightly greater than the diameter of the runners 19, and the height of the widening will at least correspond to the combined height of the two runners. Elongate openings 25 for accommodating the legs of the U-shaped element 21 will also conveniently be provided by the side of the widening 24, said elongate openings 25 having a placement in relation to said widening such that the legs of the U-shaped element 21 will pass into the upper part of the elongate openings 25 when the runners 19 of said slide shoe are moved into said widening 24, whereafter the slide shoe 16 can be lowered slightly due to the fact that the legs of said element can move down in the elongate opening, although sufficiently for the lowermost runner 19 to reach down to beneath the bottom of the widening 24 and hold the slide shoe 16, and therewith the whole of the load carrier, firmly in the carrier rail.

As an alternative to the widening 24, the carrier rail 10 may be terminated at a given distance from the ceiling of the loading compartment, so that the slide shoe runners 19 can be inserted into the intermediate channel 12 of the carrier rail 10 immediately from above. The arrangement may also be such as to enable the slide shoe to be inserted into the intermediate channel of the carrier rail from beneath, by providing a widening at this end of the carrier rail. Alternatively, the carrier rail may be adapted to permit insertion of the slide shoe from beneath in some other way.

It will be understood that the locking device for locking the slide shoe in a desired vertical position along the carrier rail may be constructed in a way different to that described above.

It will be understood that when the loading compartment is lined with wall panels that cover the side walls of the compartment, and therewith also the outer surface 15 of the hollow channels 11 as described above, it is necessary to make openings in the panels that can accommodate the locking devices. The openings in both the external surfaces 15 of the hollow channels 11 and in the wall lining panels may be made in one and the same operation.

## Claims

1. A load carrier arrangement in loading compartments comprising a pair of vertically disposed carrier rails (10) and a load carrier that extends between said rails and that has provided at both ends thereof slide shoes (16) that can be raised and lowered along the carrier rails, which carrier rails (10) include a longitudinally extending recess (12) in which runners (19) mounted on respective slide shoes (16) can run, **characterised in that** the carrier rails (10) include hollow channels (11) lying on respective sides of a longitudinally extending slot (13) that is open towards the longitudinally extending recess (12), wherein the hollow channels (11) having external wall surfaces (15) that are sunken in relation to an external surface outwardly of the longitudinally extending recess (13) such that an outer surface of a wall lining panel disposed inside the loading compartment and lying on the external wall surfaces (15) of the hollow channels will lie generally in line with the outer surface outside the longitudinally extending recess (13), and through the slot (13) shafts (20) carrying said runners (19) extend from the recess (12) of the carrier rail and into the inside of the loading compartment.

2. An arrangement according to Claim 1, **characterised in that** each slide shoe (16) includes at least two runners (19) disposed one above the other.

3. An arrangement according to any one of the preceding Claims, **characterised in that** respective slide shoes (16) include a locking device (14, 21) for locking said shoes (16) in selected height positions along the carrier rail (10).

4. An arrangement according to Claim 3, **characterised in that** the locking device includes a U-shaped element (21) having legs whose free ends are intended to grip through openings (14) in the carrier rail (10).

5. An arrangement according to Claim 4, **characterised in that** the openings (14) are disposed in the hollow channels (11).

## Patentansprüche

1. Latträgeranordnung in Ladeabteilen, aufweisend ein Paar von vertikal ingeordneten Trägerschienen (10), und einen Lastträger, der sich zwischen den Schienen erstreckt und an dessen beiden Enden Gleitschuhe (16) vorgesehen sind, die entlang der Trägerschienen angehoben und abgesenkt werden können, wobei die Trägerschienen (10) eine sich in Längsrichtung erstreckende Aussparung (12) beinhalten, in der an jeweiligen Gleitschuhen (16) montierte Läuferstücke (19) laufen können, **dadurch gekennzeichnet, dass** die Trägerschienen (10) hohle Kanäle (11) beinhalten, die auf jeweiligen Seiten eines sich in Längsrichtung erstreckenden Schlitzes (13) liegen, der zu der sich in Längsrichtung erstreckenden Aussparung (12) hin offen ist, wobei die hohlen Kanäle (11) Außenwandflächen (15) aufweisen, die bezüglich einer Außenfläche außerhalb der sich in Längsrichtung erstreckenden Aussparung (13) abgesenkt sind, derart, dass eine Außenfläche einer Wandverkleidüngstafel, die im Inneren des Ladeabteils angeordnet ist und auf den Außenwandflächen (15) der hohlen Kanäle aufliegt, im Wesentlichen in einer Linie mit der Außenfläche außerhalb der sich in Längsrichtung erstreckenden Aussparung (13) zu liegen kommt, und sich durch den Schlitz (13) Schäfte (20) erstrecken, welche die Läuferstücke (19) tragen und welche sich von der Aussparung (12) der Trägerschiene aus und ins Innere des Ladeabteils hinein erstrecken.

2. Anordnung nach Anspruch 1, **dadurch gekennzeichnet, dass** jeder Gleitschuh (16) mindestens zwei Läuferstücke (19) beinhaltet, die übereinander angeordnet sind,

3. Anordnung nach einem der vorhergehenden Ansprüche, **dadurch gekennzeichnet, dass** jeweilige Gleitschuhe (16) eine Verriegelungsvorrichtung (14, 21) beinhalten, welche die Schuhe (16) in ausgewählten Höhenpositionen entlang der Trägerschiene (10) verriegelt.

4. Anordnung nach Anspruch 3, **dadurch gekennzeichnet, dass** die Verriegelungsvorrichtung ein U-förmiges Element (21) beinhaltet, das Schenkel aufweist, deren freie Enden dazu dienen sollen, durch Öffnungen (14) in der Trägerschiene (10) hindurchzugreifen.

5. Anordnung nach Anspruch 4, **dadurch gekennzeichnet, dass** die Öffnungen (14) in den hohlen Kanälen (11) angeordnet sind.

## Revendications

1. Dispositif porte-charge dans des compartiments de chargement comprenant une paire de rails de support (10) disposés verticalement et un porte-charge qui s'étend entre les rails et muni à ses deux extrémités de patins coulissants (16) qui peuvent être montés et descendus le long des rails de support, lesquels rails de support (10) comprennent un évidement (12) longitudinal dans lequel des galets (19) montés sur les patins coulissants (16) respectifs peuvent courir,
**caractérisé en ce que**
les rails de support (10) comprennent des canaux creux (11) situés sur des côtés respectifs d'une fente (13) longitudinale ouverte vers l'évidement (12) longitudinal, les canaux creux (11) ont des surfaces de paroi externes (15) en retrait par rapport à une surface externe à l'extérieur de l'évidement (12) longitudinal de façon qu'un panneau de revêtement de paroi à l'intérieur du compartiment de chargement et situé sur les surfaces de paroi externes (15) des canaux creux ait une surface extérieure globalement alignée avec la surface extérieure à l'extérieur de l'évidement (12) longitudinal, et des arbres (20) supportant les galets (19) traversant la fente (13) à partir de l'évidement (12) du rail de support jusqu'à l'intérieur du compartiment de chargement.

2. Dispositif selon la revendication 1,
**caractérisé en ce que**
chaque patin coulissant (16) comprend au moins deux galets (19) l'un au-dessus de l'autre.

3. Dispositif selon l'une quelconque des revendications précédentes,
**caractérisé en ce que**
les patins coulissants (16) respectifs comprennent un dispositif de blocage (14, 21) pour bloquer les patins (16) dans des positions de hauteur sélectionnées le long du rail de support (10).

4. Dispositif selon la revendication 3,
**caractérisé en ce que**
le dispositif de blocage comprend un élément en forme de U (21) ayant des pieds dont les extrémités libres sont destinées à venir s'insérer dans des ouvertures (14) sur le rail de support (10).

5. Dispositif selon la revendication 4,
**caractérisé en ce que**
les ouvertures (14) débouchent dans les canaux creux (11).
